# EUROPEAN PATENT SPECIFICATION

(11) **EP 3 742 025 B1**
(45) Date of publication and mention of the grant of the patent: **12.07.2023**
(21) Application number: 20175883.6
(22) Date of filing: 21.05.2020
(51) Int. Cl.: F16H 37/04, F16H 61/00, F16H 61/688

(54) **METHOD FOR MANAGING A BRAKE-TO-CLUTCH FUNCTIONALITY IN A DCT TRANSMISSION FOR AN OFF-ROAD VEHICLE**
VERFAHREN ZUR STEUERUNG EINER BREMSE-KUPPLUNG-FUNKTIONALITÄT IN EINEM DOPPELKUPPLUNGSGETRIEBE (DCT) FÜR EIN GELÄNDEFAHRZEUG
PROCÉDÉ DE GESTION D'UNE FONCTIONNALITÉ FREIN-EMBRAYAGE DANS UNE TRANSMISSION DCT POUR VÉHICULE TOUT-TERRAIN

(30) Priority: 22.05.2019 IT 201900007108
(43) Date of publication of application: 25.11.2020
(73) Proprietor: CNH Industrial Italia S.p.A., 10156 Torino (IT)
(72) Inventor: Berselli, Alberto, 41043 Modena (IT); Guidetti, Marco, 41012 Carpi (Modena) (IT); Inversani, Alessio, 41030 Cavezzo (Modena) (IT); Petrigliano, Rocco, 75029 Valsinni, MT (IT)
(74) Representative: CNH Industrial IP Department

(56) References cited:
- EP-A1- 3 470 707
- WO-A1-2019/068651
- DE-A1-102007 048 268

## Description

### TECHNICAL FIELD

The present invention relates to a method for managing a brake-to-clutch functionality in a dual clutch transmission architecture, in particular for an off road vehicle such as an agricultural vehicle. Such a method is known, for example, from WO 2019/068651 A1.

### BACKGROUND OF THE INVENTION

Off road vehicles, such as agricultural vehicles, are nowadays equipped with dual clutch transmissions (DCT) in order to improve the performances of the vehicle itself, e.g. faster shifting of the speed ratios and better efficiency due to the reduced number of clutches implied by the design. Moreover, DCT configuration offers more than one way for a proper design of its control.

Essentially, DCT comprises two main clutches, namely forward and rearward clutches, that are deputed to select the forward and reverse direction of motion of the tractor and two additional clutches, namely odd and even clutches, configured to select two auxiliary shafts which carries the synchronizer elements. DCT further comprises a plurality of synchronizer elements which may be moved from a neutral position to engage one gear mounted concentric to the shaft and free to rotate in respect to the shaft itself; a counter wheel of the engaged gear is mounted on the output shaft of the DCT and therefore the engagement of the synchronizer define the speed ratio between an input shaft, namely the engine shaft, and an output shaft, namely the output shaft of the DCT gearbox.

It is further known to provide braking functionalities to the vehicle by modulating the active clutch between forward or reverse main clutches; such procedure is known as "brake-to-clutch". Indeed, when brake pedal is pressed by a user, clutch actuation pressure is reduced, thereby allowing sliding between its disks. Such sliding generates a braking torque which is transmitted to output shaft till parking the vehicle.

However, off-road vehicles need a huge braking force which has to be imparted to the transmission in order to allow its parking, or, generally, to control its deceleration.

Such need of huge braking force is due principally because of the mass of the vehicle or because of an excessive drag torque of the main clutches. Accordingly, braking force provided by the sliding of clutch disks is not enough to generate such high braking force. Moreover, the user should impart a great pressure on the pedals of the vehicle to allows disks clutch sliding.

Furthermore, drag torque of main clutches would move anyway the vehicle because of the high ratio between main clutches and the transmission. Indeed main clutches, even if they dissipate torque, use the positive torque of the engine and, accordingly, forward or rearward motion will be transmitted to the transmission at low gears.

In view of the above, brake-to-clutch functionality on agricultural vehicle is uncomfortable for the driver of the vehicle and, furthermore, may not be sufficient to allow parking, or deceleration, of the vehicle. Furthermore, vehicle could not be really stopped because of drag torque of clutches.

A possible solution to the problem of huge torques could be change clutch dimensions, i.e. providing bigger disk clutches with bigger surfaces. However, such change would affect transmission architecture and would lead to a totally new design of the vehicle. Furthermore, bigger disks would also cause increase dimension of the transmission and accordingly, increase of weight of the vehicle.

However, this solution would even worse the drag torque applied from clutches to the transmission. To solve drag torque issue, dry clutches or lower dimension clutches should be used. Accordingly, there is no a clear solution to improve the brake-to-clutch functionality at low gears for off-road vehicles such as agricultural vehicles. WO2019068651 discloses a method and system for locking a dual clutch transmission of a work vehicle which is in movement, said method essentially comprising the phases of using the rearward clutch of the dual clutch transmission to brake the vehicle until a preset value of velocity is reached.

Therefore, the need is felt to provide a comfortable and effective brake-to-clutch functionality for dual clutch transmission architecture. Such need is even more felt in automatic driving agricultural vehicles.

An aim of the present invention is to satisfy the above mentioned needs in a cost-effective and optimized way, i.e., if possible, without substantially modifying dual clutch architecture layout.

### SUMMARY OF THE INVENTION

The aforementioned aim is reached by method for controlling a dual clutch transmission as claimed in the appended set of claims.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a dual clutch transmission architecture; and
- Figures 2A, 2B and 2C are schematic representations of different phases of the operation of dual clutch transmission architecture of figure 1 according to the method of the present invention.

### DETAILED DESCRIPTION OF THE INVENTION

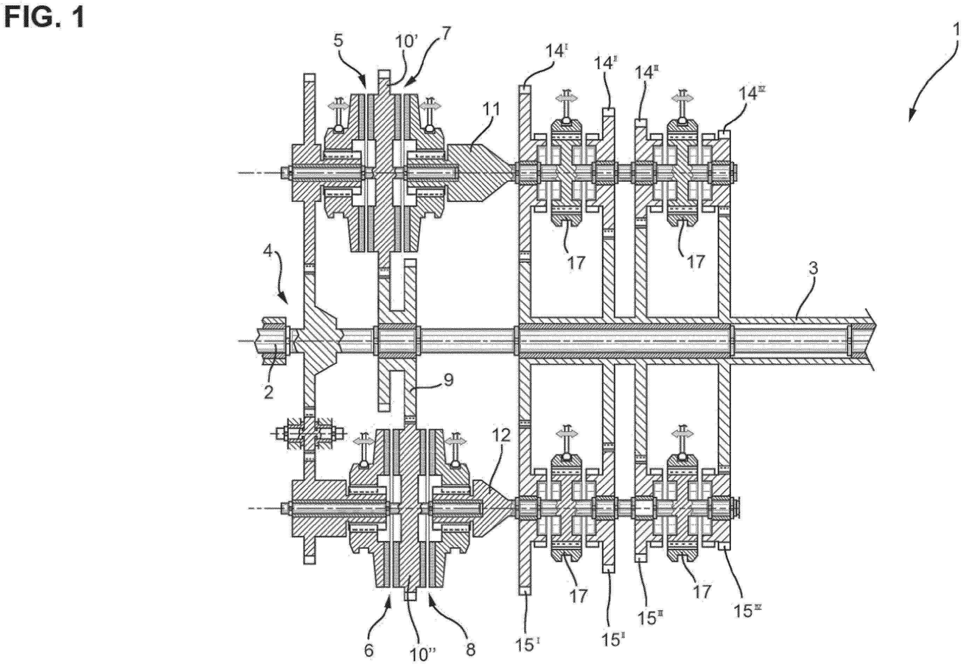

Figure 1 discloses a dual clutch transmission 1 for an off-road vehicle, such as a tractor (not illustrated), comprising an engine input shaft 2, operatively connected to an engine (not illustrated) of the work vehicle, and an output shaft 3, which can be coupled to the drive system of the off road vehicle.

Transmission 1 moreover comprises a first main clutch 5, hereinafter "forward clutch", and a second main clutch 6, hereinafter "rearward clutch", both coupled to the engine input shaft 2 via an input stage 4. Preferably the forward clutch 5 and the rearward clutch 6 are placed opposite each other with respect to the input shaft 2.

In a known configuration, the forward clutch 5 couples the engine input shaft 2 to the output shaft 3 in order to allow a forward motion of the work vehicle while the rearward clutch 6 couples the engine input shaft 2 to the output shaft 3 in order to allow a rearward motion of the work vehicle.

Transmission 1 further comprise a first clutch 7, hereinafter "even clutch", and a second clutch 8, hereinafter "odd clutch". The even clutch 7 is configured to couple a first auxiliary shaft 11, hereinafter "even shaft", with the forward clutch 5. The odd clutch 8 is configured to couple a first auxiliary shaft 12, hereinafter "odd shaft", with the rearward clutch 6.

Advantageously, the forward clutch 5 is coupled to the even clutch 7 by a first housing 10' and the rearward clutch 6 is coupled to the odd clutch 8 by a second housing 10". The first and the second housing 10', 10" are coupled together by an intermediate gear 9 carried by the engine input shaft.

Preferably the intermediate gear 9 is configured to be coupled to the first housing 10' through a first gear ratio and to be coupled to the second housing 10" through a second gear ratio.

In view of above, thanks to the coupling of the housings 10', 10" with the intermediate gear 9, the even shaft 11 may be coupled to the rearward clutch 6 and the odd shaft 12 may be coupled to the forward clutch 5.

The even shaft 11 and the odd shaft 12 each comprise a plurality of selection elements 17, e.g. dog or joint clutches or synchronizers, fixedly carried by the respective shaft 11, 12 and therefore rotate together with to these latter. Preferably the even or odd shaft accommodates a plurality of gears having a different size one with respect to the other and that are supported in a rotatable free manner the respective shaft 11, 12, e.g. by means of bearings, so that they are not forced to rotate to the same speed of the respective shaft 11, 12 when the engaging selection element 17 is in their neutral position.

Preferably the even shaft 11 may comprise four gears 14, namely a first gear 14^{I} having the biggest diameter, a fourth gear 14^{IV} having the smallest diameter and a second and third gears 14^{II}, 14^{III} having respective diameters comprised between the first and the fourth gears.

Similarly, the odd shaft 12 may comprise four gears 15, namely a first gear 15^{I} having the biggest diameter, a fourth gear 15^{IV} having the smallest diameter and a second and third gears 15^{II}, 15^{III} having respective diameters comprised between the first and the fourth gears.

Advantageously the gear 14^{I} has the same diameter of gear 15^{I}, gear 14^{II} has the same diameter of gear 15^{II}, gear 14^{III} has the same diameter of gear 15^{III} and gear 14^{IV} has the same diameter of gear 15^{IV}.

The gears of gears sets 14, 15, when selected represent the different speed ratios of the transmission; namely first speed ratio selecting gear 15^{IV}, second speed ratio selecting gear 14^{IV}, third speed ratio selecting gear 15^{III}, fourth speed ratio selecting gear 14^{III}, fifth speed ratio selecting gear 15^{II}, sixth speed ratio selecting gear 14^{II}, seventh speed ratio selecting gear 15^{I} or eighth speed ratio selecting gear 14^{I}

As said above, gears of the gears sets 14, 15 may be selected by a selection element 17 configured to couple the shaft with the chosen gear. Preferably the even shaft 11 may comprise two selection elements 17 interposed respectively between the gear 14^{I} - 14^{II} and 14^{III} -14^{IV}. Similarly, the odd shaft 12 may comprise two selection elements 17 interposed respectively between the gear 15^{I} - 15^{II} and 15^{III} -15^{IV}.

The counter wheel of the engaged gears of the gear sets 14, 15 is rigidly mounted on the output shaft 3, that is preferably concentric with the engine shaft 2 and that may be directly connected to other elements of the transmission (not shown) till vehicle wheels.

The above described clutches 5, 6, 7, 8 and the selection elements 17 can be selected by respective actuators (not shown) that are controlled by an electronic control unit (not shown). The electronic control unit controls said clutches or said electronic motors by sending control electric signals directed to the respective clutches or motors to be controlled.

The electronic control unit can be either the ECU of the vehicle or the ECU of the Driveline. The electronic control unit is configured to control the above cited elements of the transmission 1 as per direct input command of the user of the vehicle or in automatic way following the shift control logic described hereinafter deployed into a specific software code, which can be downloaded into the electronic unit.

Furthermore, electronic control unit communicates electronically with a plurality of sensors configured to detect physical quantities related to the operation of the transmission (e.g. velocity, torque) or of said vehicle (e.g. velocity), such quantities are then elaborated by the electronic control unit to control the aforementioned elements.

A first, known, example of operation is the take-off of transmission 1 from a park condition of the vehicle in which the park brake is engaged and the engine is off.

The user switch on the engine and shift the shuttle lever from park to forward position; in this condition clutches 5 and 6 are still open and the engine shaft 2 starts to rotate, consequently all the elements which are directly coupled to the engine shaft 2 (e.g. the input stage 4) are rotating. A gear is selected between the odd or even shaft 11, 12, e.g. gear 14^{IV} of even shaft 11, by moving the selection element 17 and even clutch 7 is engaged. In this way, there is a continuous mechanical path from the even shaft 11 to the output shaft 3. For example, the user by moving a lever in the vehicle, allows the forward clutch 5 to be engaged and the housings 10' and 10" start to rotate and thanks to even clutch 7, the even shaft 11 is forced to rotate as well as the output shaft 3 thanks to the mechanical connection which is established form engine shaft 2 to output shaft 3.

A second, known, example of operation is the shift of gear, e.g. passing from gear 14^{IV} to gear 15^{IV}, when the vehicle is moving, e.g. forward.

Since the vehicle is moving forward, the mechanical path between the engine shaft 2 and the output shaft 3 is the same as described in the previous example. Therefore, forward clutch 5 is engaged, even clutch 7 is engaged, in order to connect even shaft 11 to the engine input shaft 2 and gear, e.g., 14^{IV} is selected to connect the even shaft 11 to the output shaft 3. The user may upshift (or downshift) by selecting the desired ratio, e.g. by selecting a button on a handle. The vehicle may moreover be provided by a dedicated control software code configured to recognize the torque demand at the output shaft 3 and automatically change the transmission ratio to a better suited ratio.

Supposing that the user decided to upshift to gear 15^{IV}, clutch 8 will be engaged so that shaft 12 starts to rotate at the same velocity of shaft 11. Then, clutch 7 will be disengaged while gear 15^{IV} will be selected by dog clutch 17.

A third example of operation, according to the method of the proposed invention, is braking the transmission simply by modulating main forward (or rearward) clutches 5, 6 and even and odd clutches 7, 8.

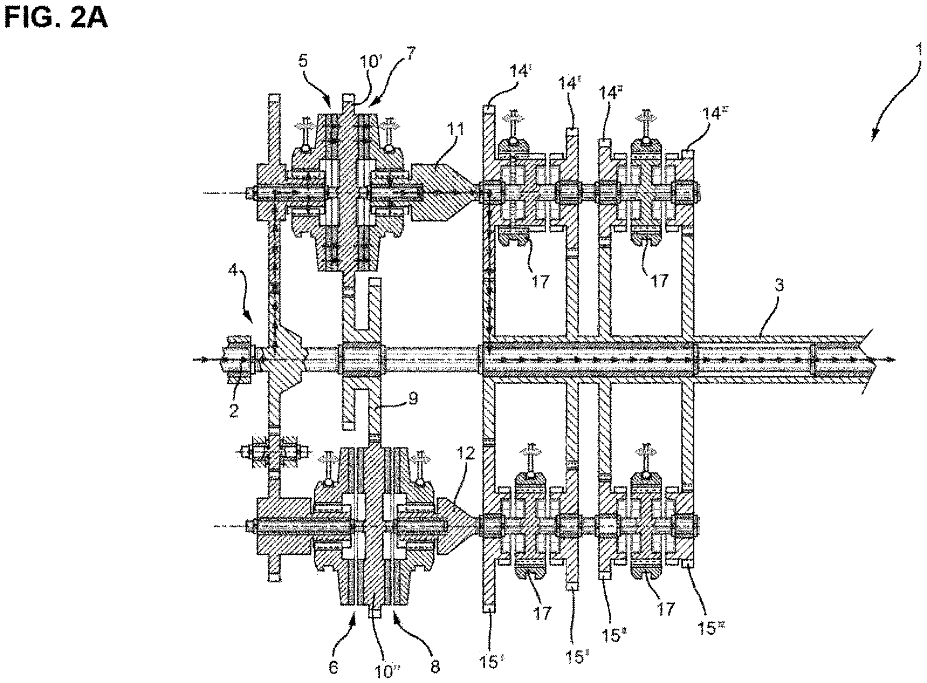

In particular, supposing that the vehicle is moving forward, as said above, the mechanical path between the engine shaft 2 and the output shaft 3 is the same as described in the previous example, as shown in figure 2A by the arrow through the transmission 1. Therefore, forward clutch 5 is engaged, even clutch 7 is engaged, in order to connect even shaft 11 to the engine input shaft 2 and gear, e.g., 14^{IV} is selected to connect the even shaft 11 to the output shaft 3.

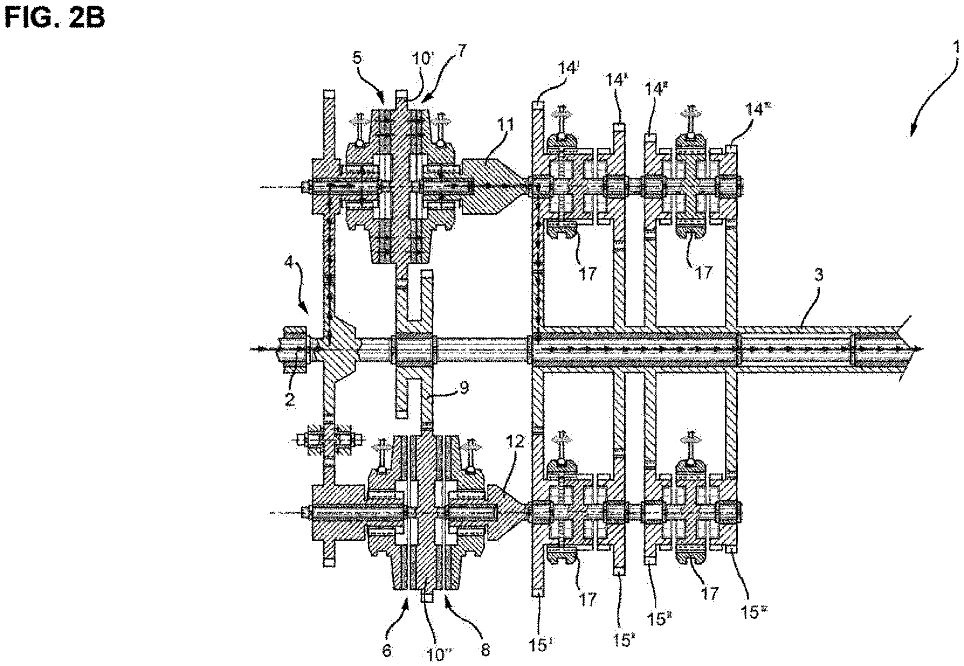

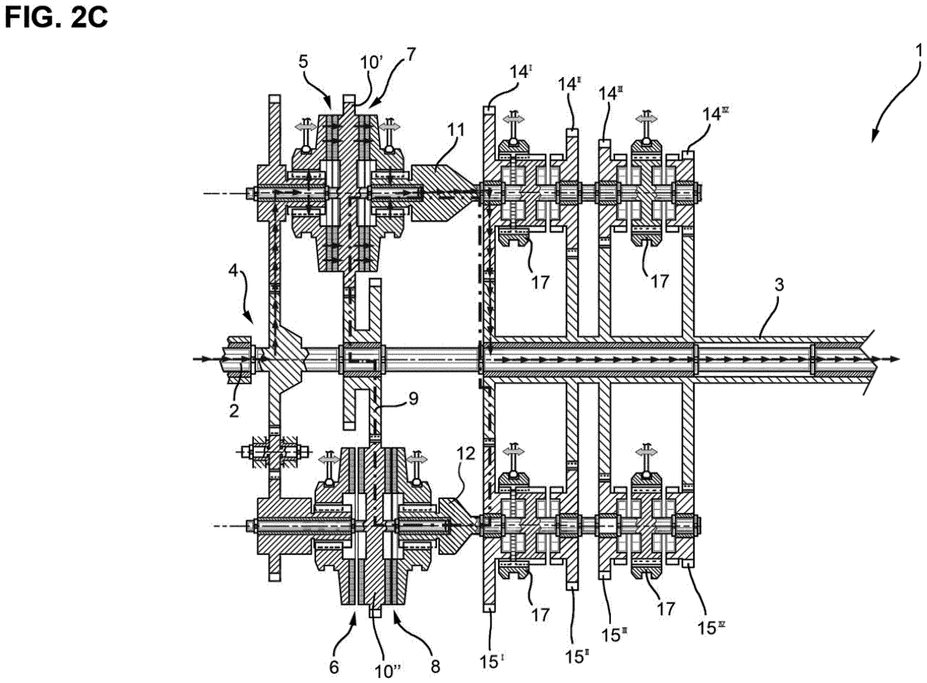

When the user decides to brake, he presses brake pedal thereby generating a signal which is managed by the electronic control unit as follows. The electronic control unit control one selection element 17 so as to select a gear, e.g. gear 15^{I} as shown in figure 2B. Accordingly, even shaft 12 starts to rotate. Then, electronic control unit controls clutch 8 so that clutch 8 starts to engage with housing 10'', as shown in figure 2C. Accordingly, since clutch 7 is engaged with housing 10' and since housings 10', 10" are connected together by a different gear ration with respect to the gear ration defined between gears 14^{I'} and 15^{I} with output shaft 3 respectively, a mechanical short circuit is provided between shafts 11, 12, output shaft 3 via clutches 7 and 8. Accordingly, since clutch 8 only starts to engage with housing 10', it slides with respect to this latter, thereby generating a resistant torque which starts to brake the transmission. Obviously, the greater the pedal is pressed, the greater clutch 8 is engaged, thereby increasing such braking torque.

When transmission reaches a predefined torque at output shaft 3, e.g. measured by dedicated torque sensors, then the electronic control unit may control main forward clutch 5 to start to disengage so that this latter may slide with respect housing 10'. Such sliding produces a further resistant torque which further brakes transmission till its stop, i.e. to a parking condition, i.e. zero velocity, into which park brake may be selected by the user of the vehicle.

According to the preceding third operation mode, invention relates to a method for controlling a DCT transmission 1 as disclosed above for achieving a brake-to-clutch functionality and comprising the following steps:
- Receiving an input for starting to brake the vehicle which is moving in a forward or rearward direction;
- Selecting a gear of the odd/even shaft which is not engaged in the forward or rearward mechanical motion path;
- Starting to engage the odd/even clutch of the odd/even shaft which is not engaged in the forward or rearward mechanical motion path so that odd/even clutch starts to slip;
- When a target condition of said transmission is reached, then start to disengage the main forward or rearward clutch till it starts to slip; and
- Maintaining the precedent configuration till said braking input is present.

In particular, the brake input may be an electronic signal derived by the brake pedal (e.g. position and/or force) of the vehicle thanks to electro-mechanical or electrohydraulic known means. Optionally, in case of an automated vehicle, such input may be an electronic input derived by a braking request calculated by the ECU of the vehicle.

The amount of engagement/disengagement of even/odd and main clutches is proportional with respect to brake input signal. Engagement or disengagement is achieved by controlling clutch disks in known way, e.g. thanks to a related hydraulic circuit.

The target condition may be taken as preferred in the peculiar application, i.e. the velocity/torque of output shaft or the velocity of the vehicle or any kind of velocity or torque parameter related to transmission 1 and by which can be deduced the amount of residual torque on the transmission.

The invention also relates to the opposite method, i.e. engaging again forward/rearward motion of the vehicle from a standstill/target velocity condition.

Such comprising the following steps:
- Receiving an input for interrupting to brake the vehicle which is moving in a forward or rearward direction and/or to accelerate the vehicle in such direction;
   - Starting to engage the main forward or rearward clutch till it stops to slip while disengaging the odd/even clutch of odd/even shaft which is not engaged in the forward or rearward mechanical motion path so that odd/even shaft is not coupled to said main forward or rearward clutch; and
- disengage a gear of the odd/even shaft which is not engaged in the forward or rearward mechanical motion path from odd/even such shaft;
- Maintaining the precedent configuration till said input is present.

Accordingly, the phases of such method are basically the same, inverted in time, with respect of the method for brakingto-clutch the vehicle.

In view of the foregoing, the advantages a method for achieving a brake-to-clutch functionality in dual clutch transmission 1 according to the invention are apparent.

The user may decelerate, stop or accelerate again a vehicle thanks to a brake-to-clutch functionality also at low gears without any effort. Indeed, the presence of the mechanical short-circuit allows to dissipate energy in synergy with the energy dissipated at the main clutch. Accordingly, it is possible to brake the vehicle by clutch even at low gears, where torque is considerable and when the vehicle is an agricultural vehicle.

Furthermore, such brake-to-clutch functionality is achieved by simply controlling existing elements; therefore, existing layouts are not needed to be modificated.

The force applied by the user to pedal can be maintained substantially constant for all gear ratios because of the target condition which activates the use of main clutch may be the same for all the gear ratios.

It is clear that modifications can be applied to the described method for achieving a brake-to-clutch functionality in a dual clutch transmission architecture which do not extend beyond the scope of protection defined by the claims.

For example, the dual clutch transmission may comprise different elements with respect to the described one, e.g. the number and/or typologies of clutches, gears and selection elements may be varied.

The target condition value and typology may be chosen according to the necessity of the specific vehicle.

Obviously different gears may be preferred according to the resistant torque acting on the shafts which are involved in the mechanical short-circuit.

## Claims

1. Method for controlling a dual clutch transmission (1) for achieving a brake-to-clutch functionality for an off road vehicle, said dual clutch transmission (1) comprising:
• an engine input shaft (2) configured to be coupled to the output of an engine of said work vehicle,
• an output shaft (3) further connectable to other drive systems of said off road vehicle, and
• a main forward clutch (5) and a main rearward clutch (6), each configured to be coupled to the engine input shaft (2);
• first and second shafts (11, 12) each configured to carry a plurality of gears (14, 15), said first and second shafts (11, 12) being configured to be coupled, via respective first and second clutches (7, 8), to said input shaft (2) of said vehicle and being configured to be coupled to the output shaft (3) defining with one of said gears (14, 15) a predetermined speed ratio between said engine input shaft (2) and said output shaft (3),
said method comprising the step:
• receiving an input for starting to brake the vehicle which is moving in a forward or rearward direction;
the method being **characterised by** the following further steps:
• selecting a gear (15) of the first/second shaft (12) which is not engaged in the forward or rearward mechanical motion path;
• starting to engage a first/second clutch (8) of said first/second shaft (12) which is not engaged in said forward or rearward mechanical motion path so that said clutch (8) starts to slip and generates a resistant torque which starts to brake the transmission;
• when a target condition of said transmission (1) is reached, then start to disengage the main forward or rearward clutch (5, 6) till it starts to slip; and
• maintaining the precedent configuration till said braking input is present.

2. Method for unlocking a dual clutch transmission of a work vehicle which has been locked according to the method of claim 1, said method comprising the following steps:
• receiving an input for interrupting to brake the vehicle which is moving in a forward or rearward direction and/or to accelerate the vehicle in such direction;
• starting to engage the main forward or rearward clutch (5, 6) till it stops to slip while disengaging first/second clutch (8) of the first/second shaft which is not engaged in the forward or rearward mechanical motion path so that said first/second shaft (8) is not coupled to said main forward or rearward clutch (5,6); and
• disengage a gear (15) of said first/second shaft (8) which is not engaged in said forward or rearward mechanical motion path from such first/second shaft (8) ;
• maintaining the precedent configuration till said input is present.

3. Method according to claim 1 or 2, wherein said target condition is a predefined velocity of said vehicle and/or said output shaft (3).

4. Method according to claim 1 or 2, wherein said target condition is a predefined torque/power of said output shaft (3) .

5. Method according to any of said preceding claims, wherein said input is generated by controlling a brake pedal position and/or force.

6. Method according to any of said preceding claims, wherein said braking or brake releasing is proportional to said input.

7. Off-road vehicle comprising a dual clutch transmission (1) provided with:
• an engine input shaft (2) configured to be coupled to the output of an engine of said work vehicle,
• an output shaft (3) further connectable to other drive systems of said off road vehicle, and
• a forward clutch (5) and a rearward clutch (6), each configured to be coupled to the engine input shaft (2);
• first and second shafts (11, 12) each configured to carry a plurality of gears (14, 15), said first and second shafts (11, 12) being configured to be coupled, via respective first and second clutches (7, 8), to said input shaft (2) of said off road vehicle and being configured to be coupled to output shaft (3) defining with one of said gears (14, 15) a predetermined speed ratio between said engine input shaft (2) and said output shaft (3),
said vehicle being **characterised by** further comprising an electronic control unit provided with elaboration means configured to execute the method according to any of claims 1 to 6 so as to achieve a brake-to-clutch functionality.

## Patentansprüche

1. Verfahren zur Steuerung eines Doppelkupplungsgetriebes (1) zur Schaffung einer Bremse-Kupplung-Funktionalität für ein Geländefahrzeug, wobei das Doppelkupplungsgetriebe (1) umfasst:
• eine Motor-Eingangswelle (2), die dazu eingerichtet ist, mit dem Ausgang eines Motors des Arbeitsfahrzeugs gekoppelt zu werden,
• eine Ausgangswelle (3), die weiterhin mit anderen Antriebssystemen des Geländefahrzeugs verbindbar ist, und
• eine Haupt-Vorwärtskupplung (5) und eine Haupt-Rückwärtskupplung (6), die jeweils dazu eingerichtet sind, mit der Motor-Eingangswelle (2) gekoppelt zu sein;
• eine erste und eine zweite Welle (11, 12), die jeweils dazu eingerichtet sind, eine Mehrzahl von Zahnrädern (14, 15) zu tragen, wobei die erste und die zweite Welle (11, 12) dazu eingerichtet sind, jeweils über eine erste beziehungsweise eine zweite Kupplung (7, 8) mit der Eingangswelle (2) des Fahrzeugs gekoppelt zu sein, und die dazu eingerichtet sind, mit der Ausgangswelle (3) gekoppelt zu sein, um mit einem der Zahnräder (14, 15) eine vorbestimmte Getriebeübersetzung zwischen der Motor-Eingangswelle (2) und der Ausgangswelle (3) zu definieren,
wobei das Verfahren den Schritt aufweist:
• Erhalten einer Eingabe, um damit zu beginnen, das Fahrzeug abzubremsen, das sich in einer Vorwärts- oder Rückwärtsrichtung bewegt;
wobei das Verfahren durch die folgenden weiteren Schritte gekennzeichnet ist:
• Auswählen eines Zahnrads (15) der ersten/zweiten Welle (12), das nicht in der mechanischen Bewegungsbahn in Vorwärts- oder Rückwärtsrichtung in Eingriff steht;
• damit Beginnen, in eine erste/zweite Kupplung (8) der ersten/zweiten Welle (12) einzugreifen, die nicht in der mechanischen Bewegungsbahn in Vorwärtsoder Rückwärtsrichtung in Eingriff steht, sodass die Kupplung (8) damit beginnt, durchzurutschen und ein Widerstandsdrehmoment erzeugt, das damit beginnt, die Übertragung abzubremsen;
• wenn ein Soll-Zustand des Getriebes (1) erreicht ist, damit Beginnen, die Haupt-Vorwärts- oder Rückwärtskupplung (5, 6) außer Eingriff zu bringen, bis sie damit beginnt, zu rutschen; und
• Beibehalten der vorhergehenden Konfiguration, solange die Brems-Eingabe vorhanden ist.

2. Verfahren zum Lösen eines Doppelkupplungsgetriebes eines Arbeitsfahrzeugs, das gemäß dem Verfahren nach Anspruch 1 festgestellt wurde, wobei das Verfahren die folgenden Schritte aufweist:
• Erhalten einer Eingabe, um den Bremsvorgang des Fahrzeugs, das sich in einer Vorwärts- oder Rückwärtsrichtung bewegt, zu unterbrechen und/oder das Fahrzeug in dieser Richtung zu beschleunigen;
• damit Beginnen, die Haupt-Vorwärts- oder Rückwärtskupplung (5, 6) in Eingriff zu bringen, bis diese damit aufhört, zu rutschen, während diese aus der ersten/zweiten Kupplung (8) der ersten/zweiten Welle, die nicht in der mechanischen Bewegungsbahn in der Vorwärts- oder Rückwärtsrichtung in Eingriff steht, ausrückt, sodass die erste/zweite Welle (8) nicht mit der Haupt-Vorwärts- oder Rückwärtskupplung (5, 6) gekoppelt ist; und
• außer Eingriff Bringen eines Zahnrads (15) der ersten/zweiten Welle (8), das nicht in der mechanischen Bewegungsbahn in der Vorwärts- oder Rückwärtsrichtung in Eingriff steht, aus der ersten/zweiten Welle (8);
• Beibehalten der vorhergehenden Konfiguration, solange die Eingabe vorhanden ist.

3. Verfahren nach Anspruch 1 oder 2, wobei der Soll-Zustand eine vorbestimmte Geschwindigkeit des Fahrzeugs und/oder der Ausgangswelle (3) ist.

4. Verfahren nach Anspruch 1 oder 2, wobei der Soll-Zustand ein(e) vorbestimmte(s) Drehmoment/Energie der Ausgangswelle (3) ist.

5. Verfahren nach einem der vorhergehenden Ansprüche, wobei die Eingabe durch die Steuerung einer Bremspedalposition und/oder -kraft erzeugt wird.

6. Verfahren nach einem der vorhergehenden Ansprüche, wobei das Bremsen oder Lösen der Bremse proportional zur Eingabe ist.

7. Geländefahrzeug mit einem Doppelkupplungsgetriebe (1), das versehen ist mit:
• einer Motor-Eingangswelle (2), die dazu eingerichtet ist, mit dem Ausgang eines Motors des Arbeitsfahrzeugs gekoppelt zu werden,
• einer Ausgangswelle (3), die weiterhin mit anderen Antriebssystemen des Geländefahrzeugs verbindbar ist, und
• einer Vorwärtskupplung (5) und einer Rückwärtskupplung (6), die jeweils dazu eingerichtet sind, mit der Motor-Eingangswelle (2) gekoppelt zu sein;
• einer ersten und einer zweiten Welle (11, 12), die jeweils dazu eingerichtet sind, eine Mehrzahl von Zahnrädern (14, 15) zu tragen, wobei die erste und die zweite Welle (11, 12) dazu eingerichtet sind, jeweils über eine erste und eine zweite Kupplungen (7, 8) mit der Eingangswelle (2) des Geländefahrzeugs gekoppelt zu sein, und die dazu eingerichtet sind, mit der Ausgangswelle (3) gekoppelt zu sein, um mit einem der Zahnräder (14, 15) eine vorbestimmte Getriebeübersetzung zwischen der Motor-Eingangswelle (2) und der Ausgangswelle (3) zu definieren,
wobei das Verfahren **dadurch gekennzeichnet ist, dass**
es weiterhin eine elektronische Steuereinheit aufweist, die mit einer Verarbeitungseinrichtung versehen ist, die dazu eingerichtet ist, das Verfahren nach einem der Ansprüche 1 bis 6 auszuführen, um eine Bremse-Kupplung-Funktionalität zu schaffen.

## Revendications

1. - Procédé de commande d'une transmission à double embrayage (1) pour obtenir une fonctionnalité frein à embrayage pour un véhicule tout-terrain, ladite transmission à double embrayage (1) comprenant :
• un arbre d'entrée moteur (2) configuré pour être couplé à la sortie d'un moteur dudit véhicule de travail,
• un arbre de sortie (3) pouvant être relié en outre à d'autres systèmes d'entraînement dudit véhicule tout-terrain, et
• un embrayage principal avant (5) et un embrayage principal arrière (6), chacun étant configuré pour être couplé à l'arbre d'entrée moteur (2) ;
• un premier et un second arbres (11, 12), chacun étant configuré pour porter une pluralité d'engrenages (14, 15), lesdits premier et second arbres (11, 12) étant configurés pour être couplés, via un premier et un second embrayages respectifs (7, 8), audit arbre d'entrée (2) dudit véhicule et étant configurés pour être couplés à l'arbre de sortie (3) définissant avec l'un desdits engrenages (14, 15) un rapport de vitesse prédéterminé entre ledit arbre d'entrée moteur (2) et ledit arbre de sortie (3),
ledit procédé comprenant les étapes consistant à :
• recevoir un signal pour commencer à freiner le véhicule qui se déplace vers l'avant ou vers l'arrière ;
le procédé étant **caractérisé par** les étapes suivantes consistant à :
• sélectionner un engrenage (15) du premier/second arbre (12) qui n'est pas engagé dans la trajectoire de mouvement mécanique vers l'avant ou vers l'arrière ;
• commencer à engager un premier/second embrayage (8) dudit premier/second arbre (12) qui n'est pas engagé dans ladite trajectoire de mouvement mécanique vers l'avant ou vers l'arrière, de sorte que ledit embrayage (8) commence à patiner et génère un couple résistant qui commence à freiner la transmission ;
• lorsqu'une condition cible de ladite transmission (1) est atteinte, commencer à désengager l'embrayage principal avant ou arrière (5, 6) jusqu'à ce qu'il commence à patiner ; et
• maintenir la configuration précédente jusqu'à ce que ladite entrée de freinage soit présente.

2. - Procédé de déverrouillage d'une transmission à double embrayage d'un véhicule de travail qui a été verrouillé selon le procédé de la revendication 1, ledit procédé comprenant les étapes consistant à :
• recevoir un signal pour interrompre le freinage du véhicule qui se déplace vers l'avant ou vers l'arrière et/ou pour accélérer le véhicule dans cette direction ;
• commencer à embrayer l'embrayage principal avant ou arrière (5, 6) jusqu'à ce qu'il cesse de patiner tout en débrayant le premier/second embrayage (8) du premier/second arbre qui n'est pas engagé dans la trajectoire de mouvement mécanique vers l'avant ou vers l'arrière de sorte que ledit premier/second arbre (8) n'est pas couplé audit embrayage principal avant ou arrière (5, 6) ; et
• désengager un engrenage (15) dudit premier/second arbre (8) qui n'est pas engagé dans ladite trajectoire de mouvement mécanique vers l'avant ou vers l'arrière de ce premier/second arbre (8) ;
• maintenir la configuration précédente jusqu'à ce que ladite entrée soit présente.

3. Procédé selon la revendication 1 ou 2, dans lequel ladite condition cible est une vitesse prédéfinie dudit véhicule et/ou dudit arbre de sortie (3).

4. Procédé selon la revendication 1 ou 2, dans lequel ladite condition cible est un couple/puissance prédéfini(e) de l'arbre de sortie (3).

5. Procédé selon l'une quelconque des revendications précédentes, dans lequel ladite entrée est générée par la commande de la position et/ou de la force de la pédale de frein.

6. Procédé selon l'une quelconque des revendications précédentes, dans lequel le freinage ou le relâchement du frein est proportionnel à ladite entrée.

7. Véhicule tout-terrain comprenant une transmission à double embrayage (1) équipée de :
• un arbre d'entrée moteur (2) configuré pour être couplé à la sortie d'un moteur dudit véhicule de travail,
• un arbre de sortie (3) pouvant être relié en outre à d'autres systèmes d'entraînement dudit véhicule tout-terrain, et
• un embrayage avant (5) et un embrayage arrière (6), chacun étant configuré pour être couplé à l'arbre d'entrée moteur (2) ;
• un premier et un second arbres (11, 12) chacun étant configuré pour porter une pluralité d'engrenages (14, 15), lesdits premier et second arbres (11, 12) étant configurés pour être couplés, via les premier et second embrayages respectifs (7, 8), audit arbre d'entrée (2) dudit véhicule tout-terrain et étant configurés pour être couplés audit arbre de sortie (3) définissant avec l'un desdits engrenages (14, 15) un rapport d'engrenage prédéterminé entre ledit arbre d'entrée moteur (2) et ledit arbre (3),
ledit véhicule étant **caractérisé par**
le fait de comprendre en outre une unité de commande électronique munie de moyens d'élaboration configurés pour exécuter le procédé selon l'une des revendications 1 à 6 de manière à obtenir une fonctionnalité frein à embrayage.
